# EUROPÄISCHE PATENTSCHRIFT

(11) **EP 1 760 452 B1**
(45) Veröffentlichungstag und Bekanntmachung des Hinweises auf die Patenterteilung: **30.04.2008**
(21) Anmeldenummer: 05019310.1
(22) Anmeldetag: 06.09.2005
(51) Int. Cl.: G01N 21/27

(54) **Vorrichtung und Verfahren zur Kalibrierung eines optischen Sensors in einer Separationseinrichtung für Blut**
Apparatus and method for the calibration of an optical sensor in a blood separating device
Appareil et procédé de calibration d'un capteur optique dans un dispositif pour la séparation du sang

(43) Veröffentlichungstag der Anmeldung: 07.03.2007
(73) Patentinhaber: Sorin Group Deutschland GmbH, 80939 München (DE)
(72) Erfinder: Hahn, Andreas, Dr. Ing., 82335 Berg (DE)
(74) Vertreter: HOFFMANN EITLE

(56) Entgegenhaltungen:
- EP-A- 0 867 709
- US-A- 4 141 654

## Beschreibung

Die Erfindung betrifft eine Vorrichtung und ein Verfahren zur Kalibrierung eines optischen Sensors in einer Separationseinrichtung für Blut.

Für die Auftrennung von Blut in seine Bestandteile sind im Stand der Technik verschiedene Separationseinrichtungen bekannt, mit deren Hilfe es möglich ist, Blut in seine Bestandteile zu trennen, damit die Blutbestandteile, beispielsweise Erythrozyten oder Plasma, separat einer weiteren Verwendung zugeführt werden können. Eines der Anwendungsgebiete für solche Blut-Separationseinrichtungen ist die Autotransfusion, bei der einem Patienten autologes Blut, beispielsweise während einer Operation, zugeführt wird. Die Transfusion von autologem Blut hat gegenüber der Transfusion von homologem Blut verschiedene Vorteile, insbesondere hinsichtlich der Vermeidung von Infektionskrankheiten.

Mit Hilfe der oben angesprochenen Separationseinrichtungen wird das zugeführte Blut, das dem Patienten dazu entnommen wird, bzw. die zugeführte Zellsuspension, die bei der Aufbereitung von intraoperativen Blutverlusten anfällt, entsprechend der Dichte in ihre Bestandteile zerlegt. Die einzelnen Fraktionen werden der Separationseinrichtung entnommen, so dass die gewünschten Blutbestandteile, gegebenenfalls nach einer weiteren Aufbereitung, dem Patienten wieder zugeführt werden können. Bei der Entnahme der Fraktionen ist entscheidend, dass die Grenzen zwischen den Fraktionen erfasst werden und die Entnahme entsprechend gesteuert wird. Denn nur wenn eine möglichst saubere Trennung der Fraktionen auch bei der Entnahme erfolgt, können die gewünschten Bestandteile mit hoher Qualität gewonnen und für die Autotransfusion vorbereitet werden.

Dementsprechend sind bei einigen Separationseinrichtungen optische Sensoren vorhanden, die die Grenzflächen erfassen, die nach erfolgter Trennung der Blutbestandteile in der Separationseinrichtung zwischen den Fraktionen vorhanden sind. Jedoch sind die Grenzflächen nur bei sorgfältiger Kalibrierung der Sensoren mit ausreichender Genauigkeit erfassbar. Die Kalibrierung der optischen Sensoren muss nicht nur zu Beginn, sondern während der gesamten Verwendungsdauer der Separationseinrichtung wiederholt durchgeführt werden. Erfolgt die Kalibrierung unter Einsatz von echtem Blut, beispielsweise indem eine Normalblutprobe mit genau bekannten und definierten Eigenschaften eingesetzt wird, wird die beste Kalibrierung der optischen Sensoren in der Separationseinrichtung erzielt. In der Praxis scheidet aber die Kalibrierung mit echtem Blut in der Regel aus. Die Kalibrierungsnormale, die als Ersatz für echtes Blut zur Kalibrierung der optischen Sensoren in Separationseinrichtungen verwendet werden, sind aber im Allgemeinen unzureichend und weisen oft nur wenige optisch unterschiedliche Bereiche auf, so dass die Kalibrierung nur für wenige Zielwerte erfolgen kann. Die Folge ist in vielen Fällen ein hystereseartiges Erfassungsverhalten der Sensoren. Überdies erlauben die bekannten Kalibrierungsnormale keine Berücksichtigung von feinen Abstufungen, die bei der Separation von Blut und den sich dabei bildenden Fraktionen auftreten.

US 4 141 654 bietet alternative Kalibrierungsnormale an. EP 0 867 709 offenbart die Anwendung eines holographischen Kalibrierungsfilters.

Vor diesem Hintergrund besteht die Aufgabe der Erfindung darin, eine Vorrichtung sowie ein Verfahren für die Kalibrierung von optischen Sensoren in Separationseinrichtungen für Blut bereitzustellen, die eine möglichst gute Kalibrierung der optischen Sensoren ohne Einsatz von echtem Blut erlauben.

Gelöst wird diese Aufgabe durch eine Vorrichtung gemäß Anspruch 1 und die Verwendung eines Hologramms gemäß Anspruch 12, sowie ein Verfahren gemäß Anspruch 17 oder 18.

Vorteilhafte Ausgestaltungen ergeben sich aus den jeweiligen Unteransprüchen.

Im Folgenden wird die Erfindung anhand von Ausführungsbeispielen unter Bezugnahme auf die beigefügten Zeichnungen genauer beschrieben, in denen zeigt:
- Figur 1: eine schematische Darstellung einer Separationseinrichtung für Blut mit einem erfindungsgemäßen Hologramm einer Normalblutprobe; und
- Figur 2: ein Diagramm zur Verdeutlichung eines Kalibrierungsvorgangs unter Einsatz eines erfindungsgemäßen Hologramms einer Normalblutprobe.

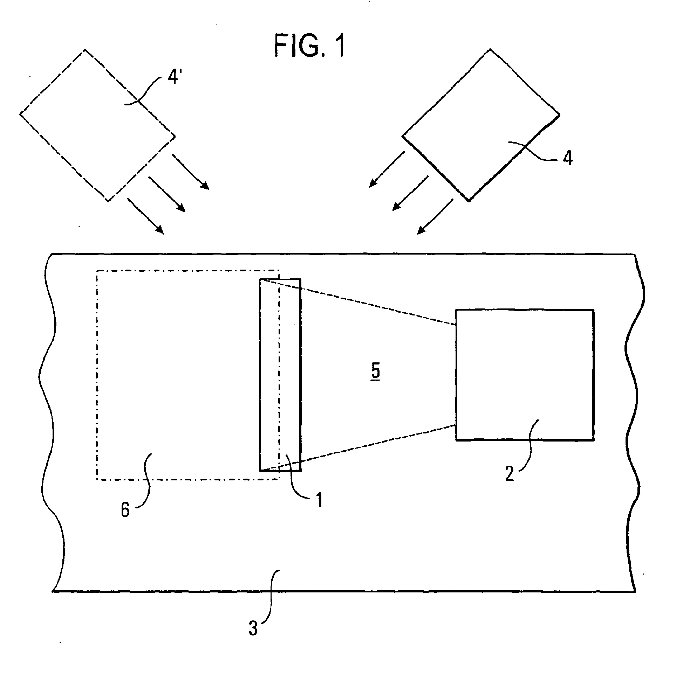

Wie sich aus der noch folgenden Erläuterung von Figur 1 ergibt, erfolgt auch beim Einsatz eines erfindungsgemäßen Hologramms, das von einer Normalblutprobe aufgezeichnet wurde, die Kalibrierung von optischen Sensoren einer Separationsvorrichtung für Blut im Grunde in herkömmlicher Weise, indem in den Sensorerfassungsbereich ein Kalibrierungsnormal gebracht wird und die erforderlichen Messungen, Justierungen und Einstellungen an den Sensoren bzw. der Separationseinrichtung durchgeführt werden. Insofern kann auf das dem Fachmann Bekannte verwiesen werden. Gemäß der Erfindung wird aber als Kalibrierungsnormal ein Hologramm verwendet, das von einer Normalblutprobe aufgezeichnet wurde.

Dementsprechend umfasst, wie Figur 1 zeigt, eine erfindungsgemäße Kalibrierungsvorrichtung für optische Sensoren einer Separationsvorrichtung für Blut ein Hologramm 1, das von einer Normalblutprobe aufgezeichnet wurde. Das Hologramm 1 wird erfindungsgemäß in Bezug auf einen zu kalibrierenden optischen Sensor 2 der Separationseinrichtung 3 für Blut derart angeordnet, dass der Sensor 2 von einem durch das Hologramm erzeugte Wellenfeld erreicht wird und damit eine Reproduktion der im Hologramm aufgezeichneten Normalblutprobe erfasst.

In Figur 1 ist durch die gestrichelten Linien ein Sensorerfassungsbereich 5 angedeutet, der in der Separationseinrichtung 3 regelmäßig so ausgerichtet ist, dass während des Betriebs der Separationseinrichtung 3 ein Behältnis 6 für das Blut erfasst wird; das Behältnis 6 ist in Figur 1 durch strich-punktierte Linien angedeutet. Wird das in dem Behältnis befindliche Blut im Rahmen der Bearbeitung durch die Separationseinrichtung 3 in seine Bestandteile zerlegt, erfasst der Sensor 2, in dessen Erfassungsbereich 5 das Behältnis 6 angeordnet ist, auf optisch-abbildendem Weg die Bereiche der einzelnen separierten Fraktionen des Blutes in dem Behältnis 6 und insbesondere die Grenzflächen zwischen den Fraktionen.

An Stelle eines mit einer Normalblutprobe gefüllten Behältnisses wird erfindungsgemäß ein Hologramm 1, das von einer Normalblutprobe aufgezeichnet wurde, in den Sensorerfassungsbereich 5 gebracht. Das aus dem Hologramm rekonstruierte Bild der Normalblutprobe wird von dem Sensor 2 erfasst und wird zur Kalibrierung desselben herangezogen, indem die für die Kalibrierung erforderlichen Messungen, Justierungen und Einstellungen vorgenommen werden. Diese Maßnahmen und Abläufe sind dem Fachmann geläufig und auf die konkrete Separationseinrichtung abgestimmt. Durch das erfindungsgemäß verwendete Hologramm 1 dabei aber erreicht, dass die Kalibrierung quasi unter genau denselben Umständen durchgeführt werden kann wie eine Kalibrierung mit einer echten Normalblutprobe.

Vorzugsweise geschieht die Kalibrierung bei genau den Lichtverhältnissen, bei denen der zu kalibrierende optische Sensor 2 während des Betriebs der Separationseinrichtung 3 die separierten Fraktionen des Blutes in dem Behältnis 6 erfasst. Das bedeutet, dass ein Hologramm der Normalblutprobe besonders vorteilhaft ist, das mit Licht der Wellenlängen aufgezeichnet wurde, das auch während des Betriebs der Separationseinrichtung 3 verwendet wird und für das der Sensor 2 üblicherweise in besonderem Maße empfindlich ist. Eine entsprechende Lichtquelle, die sowohl für den Betrieb der Separationseinrichtung 3 zur Ausleuchtung des Behältnisses 6 als auch für die Kalibrierung zur Ausleuchtung des Hologramms 1 eingesetzt wird, ist in Figur 1 mit dem Bezugzeichen 4 gekennzeichnet. Diese Lichtquelle ist üblicherweise ein Bestandteil der Separationseinrichtung 3.

Sofern bei der Separationseinrichtung 3 zur Ausleuchtung des Behältnisses 6 im Sensorerfassungsbereich 5 auf Umgebungslicht zurückgegriffen wird, kann auch bei der Kalibrierung auf eine Lichtquelle verzichtet werden. Das heißt, dass die Kalibrierung des optischen Sensors 2 ebenfalls unter Ausnutzung von Umgebungslicht zur Ausleuchtung des Hologramms 1 im Sensorerfassungsbereich 5 durchgeführt wird.

Aber unabhängig davon, ob die Separationseinrichtung 3 eine Lichtquelle 4 zur Ausleuchtung des Behältnisses 6 im Sensorerfassungsbereich 5 aufweist oder dabei mit Umgebungslicht arbeitet, kann bei der Kalibrierung unter Einsatz eines erfindungsgemäßen Hologramms 1 eine zusätzliche Lichtquelle zur Ausleuchtung des Hologramms 1 im Sensorerfassungsbereich 5 vorgesehen werden. Diese zusätzliche Lichtquelle wird in Figur 1 ebenfalls durch die Lichtquelle mit dem Bezugzeichen 4 repräsentiert.

Bei den zuvor geschilderten Ausführungsbeispielen der Erfindung ist an der Stelle des Kalibrierungshologramms 1 offensichtlich ein Reflektionshologramm besonders vorteilhaft einzusetzen, da auch die separierten Fraktionen des Blutes von dem optischen Sensor 2 aufgrund des reflektiertes Lichts erfasst werden, das von dem Blut in dem Behältnis 6 zurückgeworfen wird. Dennoch eignen sich grundsätzlich auch Durchlichthologramme als Kalibrierungsnormale gemäß der Erfindung. Sofern die Separationseinrichtung 3 keine entsprechende Lichtquelle aufweist, ist beim Einsatz eines Durchlichthologramms eine weitere Lichtquelle 4' vorzusehen, die das Durchlichthologramm so durchstrahlt, dass die in dem Hologramm aufgezeichnete Normalblutprobe in einer für den optischen Sensor 2 erfassbaren Weise rekonstruiert wird.

Für die Anfertigung der erfindungsgemäßen Hologramme, in denen eine Normalblutprobe aufgezeichnet ist, stehen verschiedene Techniken zur Verfügung, die sich grundsätzlich und in gleicher Weise eignen. Wie bereits angesprochen, können neben den Auflicht- oder Reflexionshologrammen auch Durchlichthologramme eingesetzt werden. Im Hinblick auf das für die Aufzeichnung eingesetzte Licht stehen ebenfalls verschiedene Möglichkeiten zur Verfügung. Zur Abdeckung eines weiten Wellenlängenbereichs bieten sich Weißlichthologramme an, bei denen auch die Rekonstruktion der aufgezeichneten Normalblutprobe mit Hilfe von eingestrahltem Weißlicht erfolgen kann, was offensichtlich insbesondere bei Separationseinrichtungen, die mit Umgebungslicht bei der Ausleuchtung des Sensorerfassungsbereiches arbeiten, aber nicht nur dort von Vorteil ist. Alternativ kann aber auch auf den Empfindlichkeitsbereich des zu kalibrierenden optischen Sensors Rücksicht genommen werden, indem ein Hologramm unter Einsatz von Licht mit Wellenlängen angefertigt wird, die in dem speziellen Empfindlichkeitsbereich des Sensors liegen.

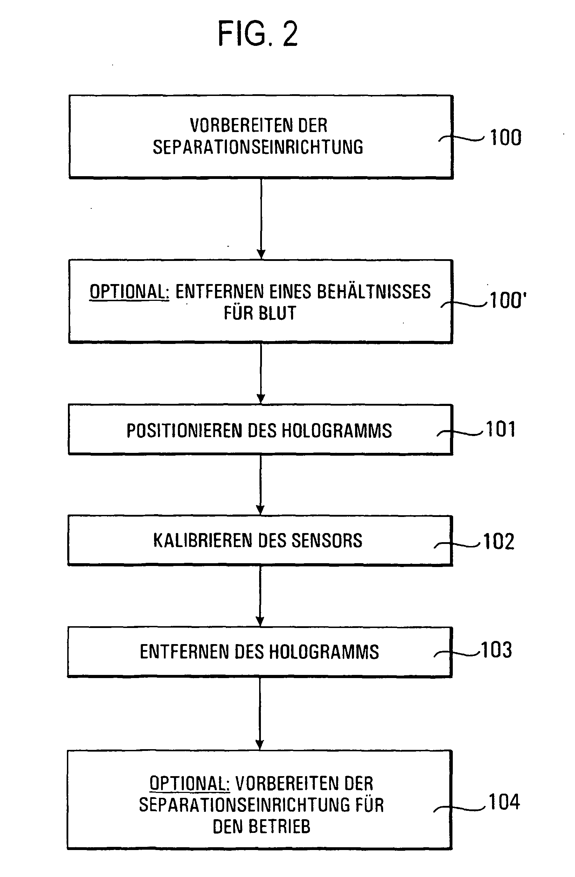

Bei der Verwendung eines erfindungsgemäßen Hologramms kann die Kalibrierung der optischen Sensoren einer Separationseinrichtung für Blut praktisch in genau derselben Weise erfolgen, in der sie insbesondere mit einer Normalblutprobe aber auch mit einem herkömmlichen Kalibrierungsnormal durchgeführt wird. Letztlich hängen die einzelnen Schritte von der konkreten Gestaltung der Separationseinrichtung ab, jedoch wird erfindungsgemäß zu einem geeigneten Zeitpunkt im Verlauf des Kalibrierungsvorgangs das Kalibrierungshologramm im Erfassungsbereich 5 des zu kalibrierenden Sensors 2 positioniert. In einer von der konkreten Gestaltung der Separationseinrichtung unabhängigen Betrachtungsweise umfasst ein Kalibrierungsverfahren für optische Sensoren einer Separationseinrichtung für Blut unter Einsatz eines erfindungsgemäßen Hologramms die folgenden grundsätzlichen Schritte, die in Figur 2 zusammengefasst sind:
(100) Vorbereiten der Separationseinrichtung 3 für die Kalibrierung des optischen Sensors bzw. der optischen Sensoren der Separationseinrichtung 3.
(101) Positionieren eines Hologramms 1, das von einer Normalblutprobe aufgezeichnet wurde, im Erfassungsbereich 5 des zu kalibrierenden optischen Sensors 2.
(102) Durchführen der Kalibrierung des zu kalibrierenden optischen Sensors 2 durch geeignete Messungen, Justierungen und/oder Einstellungen.
(103) Entfernen des Hologramms 1 aus der Separationseinrichtung 3.

An die Schritte 100 bis 103 kann sich der folgende grundsätzliche Schritt anschließen:
(104) Vorbereiten der Separationseinrichtung 3 auf einen anschließenden Betrieb.

Schritt 104 ist dann von besonderer Bedeutung, wenn auf den Schritt 100 der folgende grundsätzliche Schritt unmittelbar folgt:
(100') Entnehmen eines Behältnisses 6 für das zu separierende Blut aus dem Erfassungsbereich 5 des zu kalibrierenden Sensors 2.

Schritt 100' ist vorteilhaft, da zweckdienlicherweise die Positionierung des Hologramms 1 an genau der Stelle erfolgt, an der das Behältnis 6 für das zu separierende Blut im Erfassungsbereich des Sensors 2 angeordnet ist. Um ausreichend Platz für die Positionierung des Hologramms zur Verfügung zu haben, wird das Behältnis 6 aus der Separationseinrichtung 3 entnommen. Üblicherweise ist ein Entnehmen des Behältnisses 6 bei den hier betrachteten Separationseinrichtungen schon vorgesehen. Das bedeutet mit anderen Worten, dass das Hologramm 1 im Erfassungsbereich 5 eines zu kalibrierenden Sensors 2 der Separationseinrichtung 3 an Stelle des im Betrieb vorhandenen Behältnisses 6 für das Blut positionierbar ist.

## Patentansprüche

1. Kalibrierungsvorrichtung für optische Sensoren einer Separationseinrichtung für Blut wobei als Kalibrierungsnormal für die Kalibrierung der optischen Sensoren ein Hologramm (1), das von einer Normalblutprobe aufgezeichnet wurde, vorgesehen ist.

2. Kalibrierungsvorrichtung nach Anspruch 1, **dadurch gekennzeichnet, dass** das Hologramm (1) im Erfassungsbereich (5) eines zu kalibrierenden Sensors (2) der Separationseinrichtung (3) positionierbar ist.

3. Kalibrierungsvorrichtung nach Anspruch 2, **dadurch gekennzeichnet, dass** eine Lichtquelle (4, 4') für die Ausleuchtung des Hologramms (1) im Erfassungsbereich (5) eines zu kalibrierenden Sensors (2) der Separationseinrichtung (3) vorgesehen ist.

4. Kalibrierungsvorrichtung nach Anspruch 3, **dadurch gekennzeichnet, dass** die Lichtquelle (4) ein Bestandteil der Separationseinrichtung (3) ist.

5. Kalibrierungsvorrichtung nach Anspruch 3, **dadurch gekennzeichnet, dass** die Lichtquelle (4, 4') zusätzlich vorgesehen ist.

6. Kalibrierungsvorrichtung nach Anspruch 3, 4 oder 5, **dadurch gekennzeichnet, dass** die Lichtquelle (4) auf der Seite des Hologramms (1) angeordnet ist, die dem zu kalibrierenden Sensor (2) der Separationseinrichtung (3) zugewandt ist, und das Hologramm ein Reflektionshologramm ist.

7. Kalibrierungsvorrichtung nach Anspruch 3, 4 oder 5, **dadurch gekennzeichnet, dass** die Lichtquelle (4) auf der Seite des Hologramms (1) angeordnet ist, die von dem zu kalibrierenden Sensor (2) der Separationseinrichtung (3) abgewandt ist, und das Hologramm ein Durchlichthologramm ist.

8. Kalibrierungsvorrichtung nach Anspruch 3 bis 7, **dadurch gekennzeichnet, dass** die Lichtquelle (4) eine Weißlichtquelle ist.

9. Kalibrierungsvorrichtung nach Anspruch 3 bis 7, **dadurch gekennzeichnet, dass** die Lichtquelle (4) Licht mit Wellenlängen abstrahlt, die auf den Empfindlichkeitsbereich des zu kalibrierenden Sensors (2) abgestimmt sind.

10. Kalibrierungsvorrichtung nach einem der vorangegangenen Ansprüche, **dadurch gekennzeichnet, dass** das Hologramm (1) unter Einsatz von Weißlicht angefertigt ist.

11. Kalibrierungsvorrichtung nach einem der vorangegangenen Ansprüche 1 bis 9, **dadurch gekennzeichnet, dass** das Hologramm (1) unter Einsatz von Licht mit Wellenlängen angefertigt ist, die auf den Empfindlichkeitsbereich des zu kalibrierenden Sensors (2) abgestimmt sind.

12. Verwendung eines Hologramms (1), das von einer Normalblutprobe aufgezeichnet wurde, für die Kalibrierung von optischen Sensoren (2) einer Separationseinrichtung (3) für Blut.

13. Verwendung eines Hologramms (1) nach Anspruch 12, **dadurch gekennzeichnet, dass** das Hologramm ein Reflektionshologramm ist.

14. Verwendung eines Hologramms (1) nach Anspruch 12, **dadurch gekennzeichnet, dass** das Hologramm ein Durchlichthologramm ist.

15. Verwendung eines Hologramms (1) nach Anspruch 12, 13 oder 14, **dadurch gekennzeichnet, dass** das Hologramm unter Einsatz von Weißlicht angefertigt ist.

16. Verwendung eines Hologramms (1) nach Anspruch 12, 13 oder 14, **dadurch gekennzeichnet, dass** des Hologramm unter Einsatz von Licht mit Wellenlängen angefertigt ist, die auf den Empfindlichkeitsbereich des zu kalibrierenden Sensors (2) abgestimmt sind.

17. Verfahren zur Kalibrierung von optischen Sensoren einer Separationseinrichtung für Blut umfassend den Schritt (101) des Positionierens eines Hologramms (1), das von einer Normalblutprobe aufgezeichnet wurde, im Erfassungsbereich (5) eines zu kalibrierenden optischen Sensors (2) der Separationseinrichtung (3) für Blut.

18. Verfahren zur Kalibrierung von optischen Sensoren nach Anspruch 17 weiter umfassend die folgenden Schritte:
(100) Vorbereiten der Separationseinrichtung (3) für die Kalibrierung des optischen Sensors bzw. der optischen Sensoren der Separationseinrichtung (3);
(102) Durchführen der Kalibrierung des zu kalibrierenden optischen Sensors (2) durch geeignete Messungen, Justierungen und/oder Einstellungen; und
(103) Entfernen des Hologramms (1) aus der Separationseinrichtung (3).

19. Verfahren nach Anspruch 18, **gekennzeichnet durch** den folgenden Schritt:
(104) Vorbereiten der Separationseinrichtung (3) auf einen an die Kalibrierung anschließenden Betrieb.

20. Verfahren nach Anspruch 18 oder 19, **gekennzeichnet durch** den folgenden Schritt, der vor dem Schritt (101) vorgesehen ist:
(100') Entnehmen eines Behältnisses (6) für das zu separierende Blut aus dem Erfassungsbereich (5) des zu kalibrierenden Sensors (2).

21. Verfahren nach einem der Ansprüche 17 bis 20, **dadurch gekennzeichnet, dass** das Hologramm (1) ein Reflektionshologramm ist.

22. Verfahren nach einem der Ansprüche 17 bis 20, **dadurch gekennzeichnet, dass** das Hologramm (1) ein Durchlichthologramm ist.

23. Verfahren nach einem der Ansprüche 17 bis 22, **dadurch gekennzeichnet, dass** das Hologramm (1) unter Einsatz von Weißlicht angefertigt ist.

24. Verfahren nach einem der Ansprüche 17 bis 22, d**adurch gekennzeichnet, dass** das Hologramm (1) unter Einsatz von Licht mit Wellenlängen angefertigt ist, die auf den Empfindlichkeitsbereich des zu kalibrierenden Sensors (2) abgestimmt sind.

## Claims

1. Calibration device for optical sensors of a separation device for blood, wherein a hologram (1), which has been recorded by a normal blood sample, is provided as a calibration standard for calibration of the optical sensors.

2. Calibration device according to claim 1, **characterised in that** the hologram (1) can be positioned in the recording region (5) of a sensor (2) to be calibrated of the separation device (3).

3. Calibration device according to claim 2, **characterised in that** a light source (4, 4') is provided for illuminating the hologram (1) in the recording region (5) of a sensor (2) to be calibrated of the separation device (3).

4. Calibration device according to claim 3, **characterised in that** the light source (4) is a component of the separation device (3).

5. Calibration device according to claim 3, **characterised in that** the light source (4, 4') is additionally provided.

6. Calibration device according to claim 3, 4 or 5, **characterised in that** the light source (4) is arranged on the side of the hologram (1) which is facing the sensor (2) to be calibrated of the separation device (3), and the hologram is a reflection hologram.

7. Calibration device according to claim 3, 4 or 5, **characterised in that** the light source (4) is arranged on the side of the hologram (1) which is facing away from the sensor (2) to be calibrated of the separation device (3), and the hologram is a transmitted light hologram.

8. Calibration device according to claim 3 to 7, **characterised in that** the light source (4) is a white light source.

9. Calibration device according to claim 3 to 7, **characterised in that** the light source (4) radiates light having wavelengths which are matched to the range of sensitivity of the sensor (2) to be calibrated.

10. Calibration device according to one of the preceding claims, **characterised in that** the hologram (1) is prepared using white light.

11. Calibration device according to one of the preceding claims 1 to 9, **characterised in that** the hologram (1) is prepared using light having wavelengths which are matched to the range of sensitivity of the sensor (2) to be calibrated.

12. Use of a hologram (1), which has been recorded by a normal blood sample, for calibration of optical sensors (2) of a separation device (3) for blood.

13. Use of a hologram (1) according to claim 12, **characterised in that** the hologram is a reflection hologram.

14. Use of a hologram (1) according to claim 12, **characterised in that** the hologram is a transmitted light hologram.

15. Use of a hologram (1) according to claim 12, 13 or 14, **characterised in that** the hologram is prepared using white light.

16. Use of a hologram (1) according to claim 12, 13 or 14, **characterised in that** the hologram is prepared using light having wavelengths which are matched to the range of sensitivity of the sensor (2) to be calibrated.

17. Process for calibration of optical sensors of a separation device for blood comprising the step (101) of positioning a hologram (1), which has been recorded by a normal blood sample, in the recording range (5) of an optical sensor (2) to be calibrated of the separation device (3) for blood.

18. Process for calibration of optical sensors according to claim 17 also comprising the following steps:
(100) preparing the separation device (3) for the calibration of the optical sensor or the optical sensors of the separation device (3);
(102) carrying out calibration of the optical sensor (2) to be calibrated by suitable measurements, adjustments and/or settings; and
(103) removing the hologram (1) from the separation device (3).

19. Process according to claim 18, **characterised by** the following step:
(104) preparing the separation device (3) for an operation following calibration.

20. Process according to claim 18 or 19, **characterised by** the following step, which is provided before step (101):
(100') removing a container (6) for the blood to be separated from the recording region (5) of the sensor (2) to be calibrated.

21. Process according to one of claims 17 to 20, **characterised in that** the hologram (1) is a reflection hologram.

22. Process according to one of claims 17 to 20, **characterised in that** the hologram (1) is a transmitted light hologram.

23. Process according to one of claims 17 to 22, **characterised in that** the hologram (1) is prepared using white light.

24. Process according to one of claims 17 to 22, **characterised in that** the hologram (1) is prepared using light having wavelengths which are matched to the range of sensitivity of the sensor (2) to be calibrated.

## Revendications

1. Dispositif de calibrage pour des capteurs optiques d'un dispositif de séparation pour le sang dans lequel un hologramme (1), qui a été enregistré pour un échantillon de sang normal, est prévu comme étalon de calibrage pour le calibrage des capteurs optiques.

2. Dispositif de calibrage selon la revendication 1, **caractérisé en ce que** l'hologramme (1) est positionnable dans la zone de détection (5) d'un capteur à calibrer (2) du dispositif de séparation (3).

3. Dispositif de calibrage selon la revendication 2, **caractérisé en ce qu'**on prévoit une source de lumière (4, 4') pour l'éclairage de l'hologramme (1) dans la zone de détection (5) d'un capteur (2) à calibrer du dispositif de séparation (3).

4. Dispositif de calibrage selon la revendication 3, **caractérisé en ce que** la source de lumière (4) est une composante du dispositif de séparation (3).

5. Dispositif de calibrage selon la revendication 3, **caractérisé en ce que** la source de lumière (4, 4') est prévue en supplément.

6. Dispositif de calibrage selon la revendication 3, 4 ou 5 **caractérisé en ce que** la source de lumière (4) est disposée sur le côté de l'hologramme (1) tourné vers le capteur à calibrer (2) du dispositif de séparation (3) et que l'hologramme est un hologramme à réflexion.

7. Dispositif de calibrage selon la revendication 3, 4 ou 5 **caractérisé en ce que** la source de lumière (4) est disposée sur le côté de l'hologramme (1) opposé au capteur à calibrer (2) du dispositif de séparation (3) et que l'hologramme est un hologramme par transmission.

8. Dispositif de calibrage selon une des revendications 3 à 7, **caractérisé en ce que** la source de lumière (4) est une source de lumière blanche.

9. Dispositif de calibrage selon une des revendications 3 à 7, **caractérisé en ce que** la source de lumière (4) émet une lumière avec des longueurs d'ondes qui sont adaptées à la zone de sensibilité du capteur à calibrer (2).

10. Dispositif de calibrage selon l'une quelconque des revendications précédentes, **caractérisé en ce que** l'hologramme (1) est mis au point en utilisant une lumière blanche.

11. Dispositif de calibrage selon l'une quelconque des revendications précédentes 1 à 9, **caractérisé en ce que** l'hologramme (1) est mis au point en utilisant une lumière ayant des longueurs d'ondes qui sont adaptées à la zone de sensibilité du capteur à calibrer (2).

12. Utilisation d'un hologramme (1), qui a été enregistré pour un échantillon de sang normal, pour le calibrage de capteurs optiques (2) d'un dispositif de séparation (3) pour le sang.

13. Utilisation d'un hologramme (1) selon la revendication 12, **caractérisé en ce que** l'hologramme est un hologramme à réflexion.

14. Utilisation d'un hologramme (1) selon la revendication 12, **caractérisé en ce que** l'hologramme est un hologramme par transmission.

15. Utilisation d'un hologramme (1) selon la revendication 12, 13 ou 14 **caractérisé en ce que** l'hologramme est mis au point en utilisant une lumière blanche.

16. Utilisation d'un hologramme (1) selon la revendication 12, 13 ou 14 **caractérisé en ce que** l'hologramme est mis au point en utilisant une lumière ayant des longueurs d'ondes adaptées à la zone de sensibilité du capteur à calibrer (2).

17. Procédé pour le calibrage de capteurs optiques d'un dispositif de séparation pour le sang comprenant l'étape (101) de positionnement d'un hologramme (1), qui a été enregistré pour un échantillon de sang normal, dans la zone de détection (5) d'un capteur optique à calibrer (2) du dispositif de séparation (3) pour le sang.

18. Procédé pour le calibrage de capteurs optiques selon la revendication 17 comprenant, de plus, les étapes suivantes :
(100) préparation du dispositif de séparation (3) pour le calibrage du capteur optique ou des capteurs optiques du dispositif de séparation (3) ; (102) réalisation du calibrage du capteur optique à calibrer (2) par des mesures, des ajustements et/ou des réglages adaptés ; et
(103) retrait de l'hologramme (1 ) du dispositif de séparation (3).

19. Procédé selon la revendication 18, **caractérisé par** l'étape suivante :
(104) Préparation du dispositif de séparation (3) à un fonctionnement suivant le calibrage.

20. Procédé selon la revendication 18 ou 19, **caractérisé par** l'étape suivante, prévue avant l'étape (101):
(100') Retrait d'un récipient (6) pour le sang à séparer de la zone de détection (5) du capteur à calibrer (2).

21. Procédé selon une des revendications 17 à 20, **caractérisé en ce que** l'hologramme (1) est un hologramme à réflexion.

22. Procédé selon une des revendications 17 à 20, **caractérisé en ce que** l'hologramme (1) est un hologramme par transmission.

23. Procédé selon une des revendications 17 à 22, **caractérisé en ce que** l'hologramme (1) a été mis au point en utilisant une lumière blanche.

24. Procédé selon une des revendications 17 à 22, **caractérisé en ce que** l'hologramme (1) a été mis au point en utilisant une lumière avec des longueurs d'ondes adaptées à la zone de sensibilité du capteur à calibrer (2).
